# EUROPÄISCHE PATENTSCHRIFT

(11) **EP 2 220 377 B1**
(45) Veröffentlichungstag und Bekanntmachung des Hinweises auf die Patenterteilung: **03.10.2012**
(21) Anmeldenummer: 08801707.4
(22) Anmeldetag: 26.08.2008
(51) Int. Cl.: F15B 11/028, B25B 5/06, F15B 21/08

(54) **VENTILVORRICHTUNG**
VALVE APPARATUS
MÉCANISME À SOUPAPE

(30) Priorität: 13.11.2007 DE 102007054503
(43) Veröffentlichungstag der Anmeldung: 25.08.2010
(60) Teilanmeldung: 12004443.3
(73) Patentinhaber: Hydac Fluidtechnik GmbH, 66273 Sulzbach/Saar (DE)
(72) Erfinder: GRIGOLEIT, Axel, 42799 Leichlingen (DE); STEINMANN, Bernhard, 66453 Gersheim (DE)
(74) Vertreter: Bartels, Martin Erich Arthur
(86) Internationale Anmeldenummer: PCT/EP2008/006976
(87) Internationale Veröffentlichungsnummer: WO 2009/062558

(56) Entgegenhaltungen:
- EP-A- 1 068 932
- WO-A-2005/005842
- DE-A1- 3 836 453
- DE-C1- 19 530 131

## Beschreibung

Die Erfindung betrifft eine Ventilvorrichtung für eine Spanndruckeinstellung und -überwachung einer Spanneinrichtung für zu spannende Werkstücke, insbesondere bei Drehmaschinen, mit mindestens einem Druckregelventil, über das eine Spanndruckeinstellung für die Spanneinrichtung erfolgt, wobei mindestens ein Drucksensor vorhanden ist, der den jeweiligen Spanndruck der Spanneinrichtung erfasst, der auf einen vorgebbaren Soll-Spanndruck abzugleichen ist, wobei zwei Wege- und/oder Druckregelventile unabhängig voneinander schaltbar sind.

Eine derartige Ventilvorrichtung ist aus EP 1 068 932 A2 bekannt geworden. Ein Ventil- und Positionskontrollsystem weist wenigstens einen Spannarm auf, welcher zwischen einer gespannten Position und einer entspannten Position in Reaktion auf eine Aktuatorbewegung zwischen einer ersten und einer zweiten Endposition bewegbar ist. Die Bewegung des Aktuators ist durch einen Differenzfluiddruck in einer ersten und einer zweiten Kammer des Aktuators kontrollierbar. Das System kontrolliert die Geschwindigkeit der Aktuatorbewegung, wenn sich der Aktuator zwischen erster und zweiter Endposition bewegt und sich diesen nähert, um eine sanfte Stossbewegung an der Endposition zu gewährleisten. Das System passt den jeweiligen Fluiddruck in erster und zweiter Kammer unabhängig voneinander an.

Bei modernen Werkzeugmaschinen, beispielsweise Drehmaschinen, werden die spanend zu bearbeitenden Werkstücke regelmäßig über hydraulisch betätigbare Spanneinrichtungen, insbesondere in Form von Spannzylindern gespannt und/oder mittels hydraulisch betätigbarer sogenannter Reitstockpinolen gegengehalten, wobei erst nach Erreichen des Spanndruckes die jeweilige Maschine freigegeben wird. Wenn sich nun während der Bearbeitung mit der Werkzeugmaschine der Spanndruck an der Spanneinrichtung aufgrund eines Fehlers reduziert, kann dies zum Lösen der Spanneinrichtung führen und das dann frei gegebene Werkstück kann zu schweren Beschädigungen an der Maschine führen und für den Maschinenbediener ein erhebliches Sicherheitsrisiko darstellen.

Neben der dahingehenden Spanndrucküberwachung auf sichere Spannkräfte, kann es auch sinnvoll sein, den Spanndruck und mithin die Spannkraft abzusenken um eine Beschädigung an dem spanend bearbeiteten Werkstück zu verhindern, wenn dieses beispielsweise aufgrund der Art der Bearbeitung aus dem "Vollen herausgedreht" reduzierte Wandstärkengeometrien erhält, die bei gleichbleibender Spannkraft, bezogen zunächst auf das eingesetzte Vollmaterial, zur Deformierung der in der Wandstärke reduzierten und mithin geschwächten Werkstückgeometrie führen würde.

Ausgehend von diesem Stand der Technik liegt der Erfindung die Aufgabe zugrunde, bei der spannenden Aufnahme von spanend zu bearbeiteten Werkstücken bei Werkzeugmaschinen, wie Drehmaschinen, die Sicherheit zu erhöhen, sowie ungewollten Beschädigungen des Werkstückes vorzubeugen. Eine dahingehende Aufgabe löst eine Ventilvorrichtung mit den Merkmalen des Patentanspruches 1 in seiner Gesamtheit.

Die erfindungsgemäße Ventilvorrichtung ist dadurch charakterisiert, dass das jeweilige Druckregelventil ein Druckminderventil ist, dass das jeweilige Druckregelventil mit einer mechanischen Selbsthemmung versehen ist, und dass das jeweilige Wegeventil zwischen dem zuordenbaren Druckregelventil und der Spanneinrichtung in einem hydraulischen Versorgungskreis geschaltet ist. Mit der dahingehenden Ventilvorrichtung ist es möglich, den sicherheitstechnisch relevanten Spanndruck einzustellen und auch während der Bearbeitung im Sinne eines Abgleichs zu überwachen, insbesondere gleichbleibend beizubehalten oder abzusenken.

Mit Hilfe des jeweiligen Drucksensors wird der aktuelle Druck der Spanneinrichtung gemessen, sei es in Form des hydraulisch zu betätigenden Spannzylinders, sei es in Form einer hydraulisch zu betätigenden Reitstockpinole. Dieser aktuelle Spanndruck soll dann einem vorgegebenen Soll-Spanndruck entsprechen, der von der Steuereinrichtung beispielsweise in Form einer Maschinensteuerung für die Werkzeugmaschine vorgebbar ist. Durch die Ansteuerung des Druckregelventiles in Form eines Druckminderventiles kann dann mittels der Ansteuerung über die Steuereinrichtung der Druck der Spanneinrichtung auf konstantbleibende Druckwerte eingestellt oder sogar abgesenkt werden. Da es dem Grunde nach für jedes zu bearbeitende Werkstück entsprechend des gewünschten Bearbeitungszustandes andere Spanndruckvorgaben gibt, werden diese von der Steuerung der Maschine, also von der Steuereinrichtung entsprechend dem Bearbeitungsfortschritt als Soll-Spanndruck zeitnah vorgegeben. Hierdurch ist zum einen eine sichere Spannkraftüberwachung erreicht, um zu vermeiden, dass sich ungewollt das Werkstück aus der Spanneinrichtung löst. Ferner ist die Möglichkeit geschaffen, bei Bedarf eine Spannkraftverminderung durchzuführen, um das Werkstück während der Bearbeitung vor Beschädigungen über eine zu hoch eingestellte Spann-Druckkraft zu sichern.

Weitere vorteilhafte Ausgestaltungen der erfindungsgemäßen Ventilvorrichtung sind Gegenstand der weiteren Unteransprüche.

Im Folgenden wird die erfindungsgemäße Ventilvorrichtung anhand verschiedener Ausführungsbeispiele nach der Zeichnung näher erläutert. Dabei zeigen in der Art von hydraulischen Schaltbildern in prinzipieller Darstellung die
- Fig. 1: eine erste Ausführungsform der erfindungsgemäßen Ventilvorrichtung unter Einsatz eines Druckregelventiles; und
- Fig. 2: eine weitere Ausführungsform gemäß der Darstellung nach der Fig. 1 unter Einsatz zweier Druckregelventile.

Bei den Ausführungsformen werden dem Grunde nach vergleichbare Komponenten, insbesondere Ventilkomponenten, eingesetzt und mit denselben Bezugszeichen benannt. Es handelt sich hierbei um die Folgenden Grundkomponenten:
- 1A, 1 B: Druckregelventile mit mechanischer Selbsthemmung,
- 2: Blende,
- 4A, 4B: Wegeventile mit rastender (selbsthaltender) Position,
- 5: Rückdrucksperre in Form eines Rückschlagventiles,
- 6A, 68: Drucksensoren,
- 7: Drehdurchführung,
- 8: zwei Rückschlagventile,
- 9: als Gleichgangzylinder ausgebildeter Spannzylinder,
- 10: Spannfutter mit kleinem Übersetzungsverhältnis (ohne Selbsthemmung),
- 11: Hydraulikspeicher,
- 12: Steuerung.

Der in den Figuren mit 9 bezeichnete Spannzylinder ist als sogenannter hydraulischer Gleichgangzylinder ausgebildet und in der einen Verfahrrichtung werden die Backen des Spannfutters 10 aufeinander zugestellt und in der gegenläufigen Richtung weg bewegt. Dergestalt läßt sich sowohl über den Innendurchmesser als auch in der anderen Betätigungsrichtung über den Außendurchmesser der Spannbacken des Spannfutters ein spanend zu bearbeitendes Werkstück (nicht dargestellt) lösbar mit einer hydraulischen Betätigungskraft festlegen.

Die mit 7 bezeichnete Drehdurchführung erlaubt ein Schwenken der Spanneinrichtung in mindestens einer Bewegungs- oder Schwenkachse. Dahingehende Drehdurchführungen für hydraulische Zu- und Abführleitungen sind im Stand der Technik in einer Vielzahl von Ausführungsformen bekannt, so dass an dieser Stelle hierauf nicht mehr näher eingegangen wird. Jedenfalls ist dergestalt über die Drehdurchführung 7 sichergestellt, dass eine hydraulische Versorgung der Arbeitsräume des Spannzylinders 9 stattfindet, auch wenn der Spannzylinder 9 mit dem Spannfutter 10 geschwenkt wird. Die aus Spannzylinder 9 und Spannfutter 10 bestehende Spanneinrichtung ist nur beispielhaft aufgezeigt; andere Arten von Spanneinrichtungen (Reitstockpinolen) sind hier gleichfalls für die noch zu beschreibende Ventilvorrichtung einsetzbar.

Die mit 2 bezeichnete Blende an der Ausgangsseite des jeweiligen Druckregelventiles 1A, 1B dient der Anpassung des Volumenstroms an die volumetrische Größe des Spannzylinders 9, die je nach Bearbeitungsfall auch für eine Werkzeugmaschine unterschiedlich sein kann. Die mit P bezeichnete Fluidleitung ist an eine hydraulische Versorgungseinrichtung (nicht näher dargestellt) angeschlossen, beispielsweise gebildet aus einer hydraulischen Versorgungspumpe. Der mit 11 bezeichnete Hydraulikspeicher, der an die Pumpenleitung P angeschlossen ist, erlaubt dann eine Druckversorgung des Systems bei Stromausfall. Die mit T bezeichnete Tankanschlussleitung oder Tankleitung erlaubt die Rückfuhr des Arbeitsmediums in Form von Hydrauliköl in den Tank, von wo aus die hydraulische Versorgung über die Pumpe unter Bildung eines hydraulischen Kreises stattfinden kann. Auch die dahingehende Anordnung ist üblich, so dass an dieser Stelle hierauf nicht mehr näher eingegangen wird.

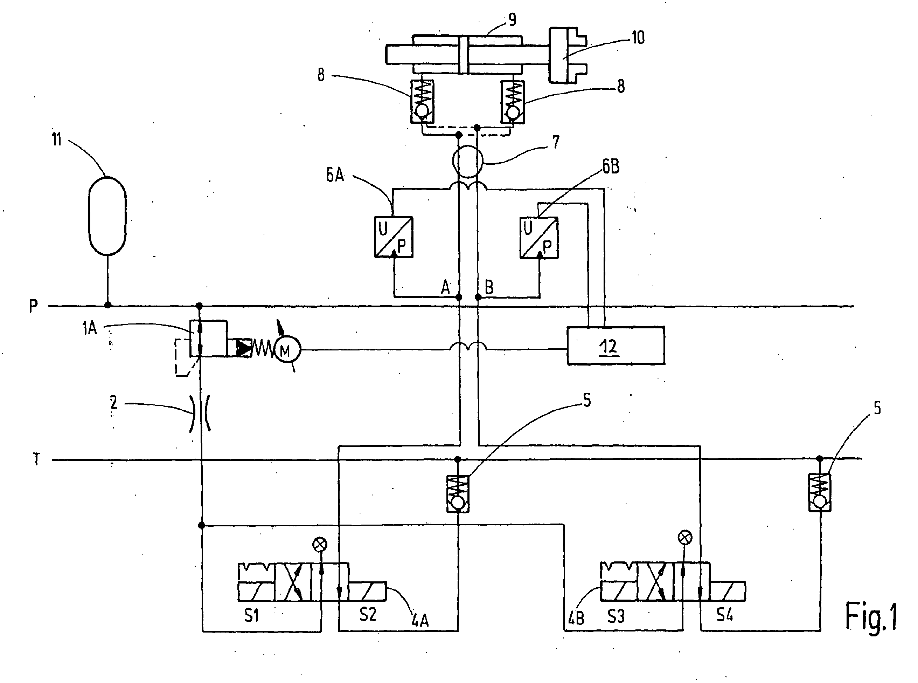

Bei der Ausführungsform nach der Fig. 1 läßt sich der Spanndruck für den Spannzylinder 9 über das Druckregelventil 1 A mit mechanischer Selbsthemmung einstellen, wobei der Wert auf einem nicht näher dargestellten Digitaldisplay einer üblichen elektronischen Steuerung 12 anzeigbar ist. Die dahingehende in Fig. 1 als Blackbox dargestellte Steuerung 12 steuert mithin zur Einstellung des vorgebbaren Spanndruckwertes den Motor M des Druckregelventiles 1A an, die darüber hinaus an die Drucksensoren 6A, 6B angeschlossen ist, um dergestalt den in den Nutzanschlüssen A, B anstehenden Ist-Druck zu erfassen, die wiederum fluidführend über die Rückschlagventile 8 jeweils mit den zugehörigen Arbeitsräumen des Spannzylinders 9 verbunden sind. Mittels der Steuerung 12 kann der Bediener also insoweit entsprechende Druckwerte für das Druckregelventil 1A frei vorgeben oder die Ansteuerung erfolgt über ein entsprechendes Programm der Steuerung 12, wobei für unterschiedlich zu spannende Werkstücke unterschiedliche Programmierungen vorgesehen sind, die wiederum im vorgebbaren Rahmen frei wählbar sind. Der derart von Hand oder über das jeweilige Programm der Maschinensteuerung vorgegebene eingestellte Druck wird also insoweit übernommen und im Rahmen der weiteren Bearbeitung kontinuierlich überwacht. Fällt dann beispielsweise aufgrund eines technischen Versagens der Spanndruck am Spannzylinder 9 ab, ist dies über den jeweils zuordenbaren Drucksensor 6A, 6B erfassbar, und eine entsprechende Fehlmeldung geht dann an die Steuerung 12 mit der Folge, dass diese den zuordenbaren Maschinentrieb an der Bearbeitungsmaschine für die Spanneinrichtung abschaltet, was zeitnah erfolgt. Dergestalt lassen sich Beschädigungen an der Bearbeitungsmaschine und/oder am zu bearbeitenden Werkstück vermeiden. Je nach Wahl der Programmierung lässt sich der Spanndruck sowohl bei einer Innenspannung als auch bei der Au-βenspannung mittels des Spannfutters 10 des Spannzylinders 9 überwachen.

Während die Spanndruckeinstellung am Ventil 1A erfolgt, geschieht das eigentliche Spannen durch Betätigen des Ventiles 4A, während Ventil 4B nicht betätigt ist. Die eingesetzten Ventile 4A, 4B sind in der Art von Wegeventilen ausgestaltet mit rastender (selbsthaltender) Position, wobei diese jeweils über zuordenbare elektrische Steuermagnete S1, S2, S3 und S4 in die jeweilige Betätigungsstellung bringbar sind, um dergestalt den Spannzylinder 9 verfahren zu können. Ist das Ventil 4A betätigt, erfolgt eine Spanndrucküberwachung durch den Drucksensor 6A, wohingegen zur selben Zeit am Drucksensor 6B kein Gegendruck anstehen darf; andernfalls wäre dies bereits ein Hinweis für eine Fehlfunktion. Soll der Spannzylinder 9 entspannt werden, um beispielsweise das zu bearbeitende Werkstück freizugeben, erfolgt dann ein Schalten von Ventil 4B, während Ventil 4A in seine Ausgangsposition zurückgeschaltet wird. Wie die Darstellung nach der Fig. 1 zeigt, ist dabei ein Ausgang des jeweiligen Wegeventiles 4A, 4B fluiddicht über einen entsprechenden Dichtstopfen abgesperrt, da insoweit dieser Ausgang für die hier vorgesehene Funktion der Ventile nicht notwendig ist.

Gemäß der Funktionsdarstellung nach der Fig. 1 sind die beiden Rückschlagventile 8 derart miteinander verschaltet, dass sie gegenseitig entsperrbar und auf ihrer sperrenden Eingangsseite sowohl mit dem zuordenbaren Nutzanschluss A als auch mit dem Nutzanschluss B verbunden sind. Die als Rückschlagventil ausgebildete Rückdrucksperre 5 verhindert, dass ein etwaig in der Tankleitung T sich aufbauender Staudruck die Spannkraft ungewollt am Spannzylinder 9 verändert. Die für die erfindungsgemäße Ventilvorrichtung eingesetzten Ventilkomponenten sind Standardbauteile und lassen sich insoweit kostengünstig bereitstellen und sind im Übrigen funktionssicher in der Anwendung. Des weiteren ist das Druckregelventil 1 A zum einen an die Fluidleitung P mit dem Hydraulikspeicher 11 angeschlossen und über die Blende 2 jeweils mit den Wegeventilen 4A und 4B fluidführend in Verbindung.

Mit der derart beschriebenen Ventilvorrichtung gemäß der Schaltung nach der Fig. 1 lässt sich bei einem Spanndruckabfall die Maschine stilllegen, um so erhöhten Sicherheitsanforderungen Genüge zu tun. Darüber hinaus erlaubt die Lösung nach der Fig. 1 eine Spannkraftverminderung, um Werkstückdeformationen vermeiden zu helfen, die beispielsweise dadurch entstehen können, dass während der Bearbeitung zunächst ein Vollprofil-Werkstück gespannt wird, das dann bei der spanenden Bearbeitung zu einem Hohlprofil wird, mit reduzierter Wandstärke, die ansonsten bei gleichbleibender Spannkraft deformiert werden könnte.

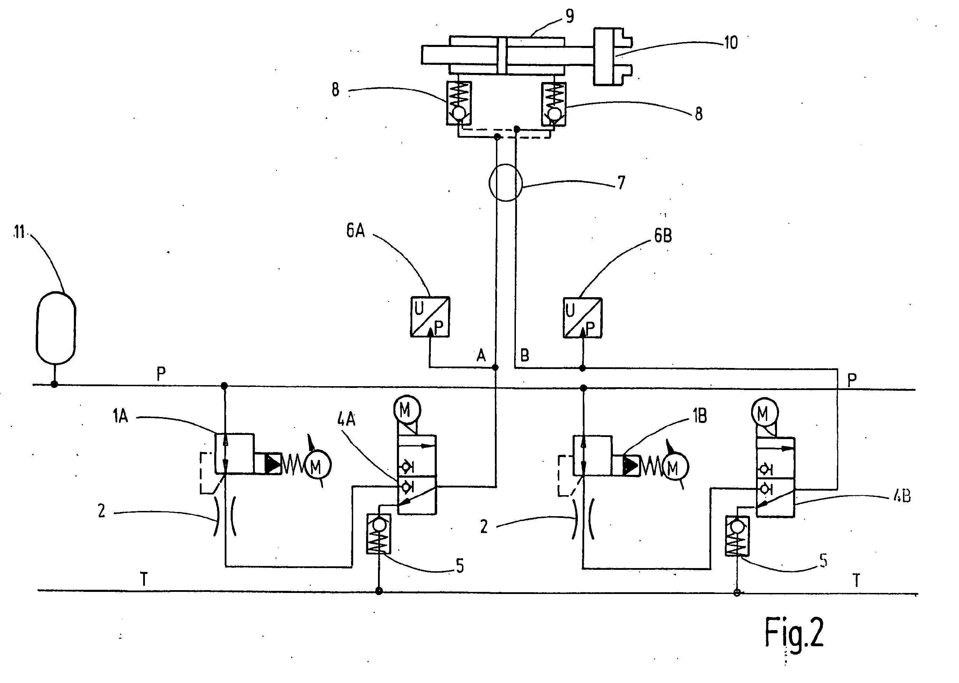

Hierfür sieht das Ausführungsbeispiel nach der Fig. 1 wiederum eine Spanndruckeinstellung am Ventil 1A vor, das bevorzugt als Proportional-Druckminderventil ausgebildet ist. Ein Spannvorgang über den Spannzylinder 9 erfolgt durch Betätigen des Ventils 4A während Ventil 4B in seiner in Fig. 2 gezeigten Stellung bleibt. Im Nutzanschluss A findet dann eine Spanndrucküberwachung am Drucksensor 6A statt, während zeitgleich am Drucksensor 6B kein oder geringer Gegendruck anstehen darf. Ein Entspannen geschieht dann durch Schalten von Ventil 4B, während Ventil 4 A wieder in die Ausgangsposition zurückgeschaltet wird, gemäß der Darstellung nach der Fig. 1. Im Rahmen der vorliegenden Beschreibung wird grundsätzlich angenommen, dass durch Druckbeaufschlagung in der Nutzleitung A bei gleichzeitigem Abführen des Hydrauliköls aus der Nutzleitung B ein Spannvorgang über den Spannzylinder 9 und das Spannfutter 10 eingeleitet wird, wobei durch Umkehrung dieser Funktion ein Entspannvorgang durchgeführt wird. Bei einem Wechsel von Innen- auf Außenspannung bezogen auf die Spannbacken des Spannfutters 10, gelten die getroffenen Ausführungen dann jedoch in umgekehrter Weise.

Für eine Spanndruckabsenkung mit nur einem Druckregler 1 A gemäß der Darstellung nach der Fig. 1 erfolgt, wie bereits dargelegt, die Spanndruckeinstellung am Ventil 1 A mittels der Steuerung 12 und das Entspannen erfolgt durch Schalten von Ventil 4A. Gleichzeitig erfolgt eine Spanndrucküberwachung mittels der Drucksensoren 6A, 6B, die ihre Werte an die Steuerung 12 üblicher Bauart weitergeben. Wird nun das Ventil 4B geschaltet, ergibt sich ein Ausgleich des Spanndrucks in den Nutzleitungen A, B, die Rückschlagventile 8 werden beide aufgesteuert und im Spannzylinder 9 findet ein Druckausgleich statt. Da im Spannfutter keine Selbsthemmung auftritt, wird die Spannkraft auf Null abgesenkt.

Das Spanndruckniveau am Druckregler 1A kann nun auf das gewünschte. Niveau abgesenkt werden und der Spanndruck sinkt in den Leitungen A und B und aufgrund der geöffneten Rückschlagventile 8 auch im Spannzylinder 9. Die Spannkraft bleibt dann bei Null. Nach erfolgtem Rückschalten des Ventiles 4B wird der Druck in der Nutzleitung B und auf der Entspannseite des Spannzylinders 9 abgebaut, und durch den anstehenden Druck in der Nutzleitung A wird am Spannfutter 10 die Spannkraft auf niedrigerem Niveau wieder aufgebaut. Dergestalt ist die angesprochene Spannkraftminimierung erreicht.

Die Lösung nach der Fig. 1 setzt also zwei 4/2-Wegeventile 4A, 4B ein, von denen in Blickrichtung auf die Fig. 2 gesehen, der jeweils linke Ausgang in den Blindanschluss führt. Ferner sind die Ventile 4A, 4B an die jeweils zuordenbare Rückdrucksperre 5 angeschlossen, die jeweils mit der Tankleitung T verbunden ist. Der Ausgang der Drucksensoren 6A, 6B ist zur Auswertung des jeweiligen Messsignales mit der als Blackbox dargestellten Maschinensteuerung 12 für die Spanndruckkraftabsenkung verbunden, wobei die Steuerung 12 für die Vorgabe eines Drucksollwertes eine nicht näher dargestellte Handeingabe aufweist oder über einen frei programmierbaren Ablaufplan (Programm) verfügt.

Sollte nicht sichergestellt werden können, dass beim Spanndruckausgleich die Reibung für den eigentlichen Halt des Werkstückes im Spannfutter 10 ausreicht, bietet sich die Ausführungsform nach der Fig. 2 mit zwei Druckreglern 1A, 1 B an. Die dahingehende Spanndruckabsenkung sieht dann vor, dass am Druckregelventil 1B ein Druck knapp unterhalb des Niveaus in der Nutzleitung A eingestellt wird. Mit Schaltung des Ventiles 4B wird dann in der Nutzleitung B ein Gegendruck aufgebaut, und die Rückschlagventile 8 werden beide aufgesteuert. Da im Spannfutter 10 keine Selbsthemmung auftritt, wird die Spannkraft auf einen geringen Wert abgesenkt. Dabei wird der Druck an den Ventilen 1 A und 1 B abgesenkt, bis in der Nutzleitung A das gewünschte Niveau erreicht ist. Die Druckdifferenz zwischen den Ventilen 1A und 1B muss dabei erhalten bleiben. Aufgrund der geöffneten Rückschlagventi le 8 sinkt der Spanndruck auch im Spannzylinder 9 mit der Folge, dass die Spannkraft dabei auf konstant niedrigem Niveau bleibt. Durch Rückschalten des Ventils 4B wird der Druck in der Nutzleitung B und auf der Entspannseite des Spannzylinders 9 abgebaut. Durch den Druck in der Nutzleitung A wird am Spannfutter 10 die Spannkraft dann auf niedrigerem Niveau wieder aufgebaut.

An Stelle des Einsatzes von 4/2-Wegeventilen ist die Ausführungsform nach der Fig. 2 mit motorangetriebenen 3/2-Wegentilen 4A, 4B ausgestattet. Ferner können die in den Fig. 1 und 2 dargestellten 2-Wege-Druckregler auch durch 3-Wege-Druckregler ersetzt werden.

Die erfindungsgemäße Ventilvorrichtung ist insofern vorteilhaft, als sie sich in Modulbauweise auch nachträglich an bereits bestehende Werkstück-Spanneinrichtungen bei Werkzeugmaschinen anbringen läßt. Aufgrund des modulartigen Blockaufbaus der Ventilvorrichtung nimmt diese wenig Bauraum ein und ist aufgrund der verwendbaren Standardbauteile kostengünstig in der Realisierung.

## Patentansprüche

1. Ventilvorrichtung für eine Spanndruckeinstellung und -überwachung einer Spanneinrichtung (9) für zu spannende Werkstücke, insbesondere bei Drehmaschinen,
- mit mindestens einem Druckregelventil (1 A, 1 B), über das eine Spanndruckeinstellung für die Spanneinrichtung (9) erfolgt, und
- mit mindestens einem Drucksensor (6A, 6B), der den jeweiligen Spanndruck der Spanneinrichtung (9) erfasst, der in Bezug auf einen vorgebbaren Soll-Spanndruck abzugleichen ist,
- wobei zwei Wege (4A, 4B)- und/oder Druckregelventile (1A, 1B,) unabhängig voneinander schaltbar sind,
- **dadurch gekennzeichnet, dass** das jeweilige Druckregelventil ein Druckminderventil (1) ist,
- dass das jeweilige Druckregelventil (1A, 1B) mit einer mechanischen Selbsthemmung versehen ist, und
- dass das jeweilige Wegeventil (4A, 4B) zwischen dem zuordenbaren Druckregelventil (1A, 1 B) und der Spanneinrichtung (9) in einen hydraulischen Versorgungskreis geschaltet ist.

2. Ventilvorrichtung nach Anspruch 1, **dadurch gekennzeichnet, dass** der jeweilige Drucksensor (6A, 6B) an eine elektronische Steuerung (12) angeschlossen ist oder dass ein Drucksensor Teil eines elektronischen Druckschalters ist, die jeweils frei programmierbar sind.

3. Ventilvorrichtung nach Anspruch 1 oder 2, **dadurch gekennzeichnet, dass** die zwei Wegeventile (4A,4B) als 3/2-Wegeventile (4A, 4B) oder 4/2-Wegeventile (4A, B) ausgabildet sind.

4. Ventilvorrichtung nach einem der Ansprüche 1 bis 3, **dadurch gekennzeichnet, dass** die Spanneinrichtung (9) zwei Rückschlagventile (8) aufweist, die fluidführend miteinander verbunden sind und die in Richtung des jeweiligen Druckminderventiles (1 A, 1 B) ihre Sperrstellung einnehmen.

5. Ventilvorrichtung nach Anspruch 4, **dadurch gekennzeichnet, dass** beide Rückschlagventile (8) fluidführend mit einem jeweiligen Ausgang des zuordenbaren Wegeventiles (4A, 4B) verbunden sind.

6. Ventilvorrichtung nach einem der Ansprüche 1 bis 5, **dadurch gekennzeichnet, dass** zur Anpassung an die volumetrische Größe der jeweils eingesetzten Spanneinrichtung (9) eine Blende (2) dient, die auf der Ausgangsseite des jeweiligen Druckminderventiles (1 A, 1 B) angeordnet ist.

7. Ventilvorrichtung nach einem der vorhergehenden Ansprüche, **dadurch gekennzeichnet, dass** das Druckminderventil (1) ein Proportional-Druckminderventil (1A, 1B) ist.

8. Ventilvorrichtung nach einem der vorhergehenden Ansprüche, **dadurch gekennzeichnet, dass** die mechanische Selbsthemmung durch ein selbsthemmendes Getriebe eines Verstellmotors (M) gebildet ist, der von einer Steuereinrichtung ansteuerbar ist.

## Claims

1. A valve apparatus for setting and monitoring a clamping pressure of a clamping device (9) for workpieces which are to be clamped, in particular in lathes,
- comprising at least one pressure control valve (1A, 1B) by means of which a clamping pressure for the clamping device (9) is set, and
- comprising at least one pressure sensor (6A, 6B) that detects the respective clamping pressure of the clamping device (9) which is to be adjusted in relation to a pre-definable setpoint clamping pressure,
- it being possible for two directional control valves (4A, 4B) and/or pressure control valves (1A, 1B) to be switched independently of one another,
- **characterised in that** the respective pressure control valve is a pressure reducing valve (1),
- that the respective pressure control valve (1A, 1B) is provided with mechanical self-locking, and
- that the respective directional control valve (4A, 4B) is connected between the assignable pressure control valve (1A, 1B) and the clamping device (9) in a hydraulic supply circuit.

2. The valve apparatus according to Claim 1, **characterised in that** the respective pressure sensor (6A, 6B) is connected to an electronic control (12) or that a pressure sensor is part of an electronic pressure switch which can respectively be freely programmed.

3. The valve apparatus according to Claim 1 or 2, **characterised in that** the two directional control valves (4A, 4B) are in the form of 3/2 directional control valves (4A, 4B) or of 4/2 directional control valves (4A, 4B).

4. The valve apparatus according to any of Claims 1 to 3, **characterised in that** the clamping device (9) has two check valves (8) which are connected to one another to carry fluid and which assume their blocking position in the direction of the respective pressure reducing valve (1A, 1 B).

5. The valve apparatus according to Claim 4, **characterised in that** the two check valves (8) are connected to a respective output of the assignable directional control valve (4A, 4B) such as to carry fluid.

6. The valve apparatus according to any of Claims 1 to 5, **characterised in that** in order to adapt to the volumetric size of the respectively used clamping device (9) an orifice (2) is used which is located on the output side of the respective pressure reducing valve (1A, 1 B).

7. The valve apparatus according to any of the preceding claims, **characterised in that** the pressure reducing valve (1) is a proportional pressure reducing valve (1A, 1 B).

8. The valve apparatus according to any of the preceding claims, **characterised in that** the mechanical self-locking is formed by a self-locking gearing mechanism of an actuator (M) which can be controlled by a control device.

## Revendications

1. Dispositif à vanne pour un réglage et un contrôle de la pression de serrage d'un dispositif (9) de serrage de pièces à serrer, notamment dans des tours,
- ayant au moins une vanne (1A, 1B) de régulation de la pression, par laquelle un réglage de la pression de serrage du dispositif (9) de serrage s'effectue, et
- ayant au moins un capteur (6A, 6B) de pression, qui détecte la pression de serrage respective du dispositif (9) de serrage, qui doit être égalisée à une pression de serrage de consigne pouvant être prescrite,
- dans lequel deux vannes à voies (4A, 4B) et/ou deux vannes (1A, 1B) de réglage de la pression peuvent être montées indépendamment l'une de l'autre,
- **caractérisé en ce que** la vanne de réglage de la pression respective est une vanne (1) de détente de la pression,
- **en ce que** la vanne (1A, 1B) de réglage de la pression respective est pourvue d'au moins un blocage automatique mécanique, et
- **en ce que** la vanne (4A, 4B) à voies respective est montée dans un circuit d'alimentation hydraulique entre la vanne (1A, 1B) de réglage de la pression pouvant être associée et le dispositif (9) de serrage.

2. Dispositif de vanne suivant la revendication 1, **caractérisé en ce que** le capteur (6A, 6B) de pression respectif est raccordé à une commande (12) électronique ou en ce qu'un capteur de pression fait partie d'un commutateur électronique de pression, qui sont programmables respectivement à volonté.

3. Dispositif de vanne suivant la revendication 1 ou 2, **caractérisé en ce que** les deux vannes (4A, 4B) à voies sont constituées en vanne (4A, 4B) à 3/2 voies ou en vanne à 4/2 voies.

4. Dispositif de vanne suivant l'une des revendications 1 à 3, **caractérisé en ce que** le dispositif (9) de serrage a deux clapets (8) antiretour, qui sont reliés entre eux fluidiquement et qui prennent leur position d'obturation dans la direction de la vanne (1A, 1B) respective de détente de la pression.

5. Dispositif de vanne suivant la revendication 4, **caractérisé en ce que** deux clapets (8) antiretour sont reliés fluidiquement à une sortie respective de la vanne (4A, 4b) à voies pouvant être associée.

6. Dispositif de vanne suivant l'une des revendications 1 à 5, **caractérisé en ce que**, pour s'adapter à la dimension en volume du dispositif (9) de serrage utilisé respectivement, on se sert d'un diaphragme (2), qui est monté du côté de la sortie de la vanne (1A, 1B) respective de détente de la pression.

7. Dispositif de vanne suivant l'une des revendications précédentes, **caractérisé en ce que** la vanne (1) de détente de la pression est une vanne (1A, 1B) de détente de la pression proportionnelle.

8. Dispositif de vanne suivant l'une des revendications précédentes, **caractérisé en ce que** le blocage automatique mécanique est formé par une transmission se bloquant de soi-même d'un servomoteur (M), qui peut être commandé par un dispositif de commande.
